# FASCICULE DE BREVET EUROPEEN

(11) **EP 3 349 160 B1**
(45) Date de publication et mention de la délivrance du brevet: **31.05.2023**
(21) Numéro de dépôt: 18150876.3
(22) Date de dépôt: 09.01.2018
(51) Int. Cl.: G06Q 20/18, G06Q 30/02, G07F 19/00

(54) **PROCÉDÉ DE TRANSMISSION DE DONNÉES, DISPOSITIF ET PROGRAMME CORRESPONDANT**
VERFAHREN ZUR DATENÜBERTRAGUNG, DAZUGEHÖRIGE EINRICHTUNG UND PROGRAM
METHOD OF TRANSMITTING DATA, CORRESPONDING DEVICE AND PROGRAM

(30) Priorité: 17.01.2017 FR 1750356
(43) Date de publication de la demande: 18.07.2018
(73) Titulaire: Banks and Acquirers International Holding, 75015 Paris (FR)
(72) Inventeur: QUENTIN, Pierre, 95880 ENGHIEN-LES-BAINS (FR)
(74) Mandataire: Vidon Brevets & Stratégie

(56) Documents cités:
- US-A1- 2004 205 491

## Description

### 1. Domaine

La présente technique se rapporte à la gestion de dispositifs de fourniture de biens et de services non surveillés. De tels dispositifs sont également appelés *« unattended »* dans la littérature. Plus particulièrement, la présente se rapporte à un procédé de transmission de messages par l'intermédiaire de tels dispositifs. Plus particulièrement encore, on présente un procédé de transmission de messages à destination d'un terminal de communication (d'un utilisateur) ainsi qu'un dispositif configuré pour la mise en oeuvre d'un tel procédé.

### 2. Art antérieur

On connaît des dispositifs dont l'objectif est de permettre à un utilisateur de réaliser un achat de biens ou de service de manière autonome, c'est-à-dire sans la supervision d'un commerçant. De tels dispositifs sont également appelés *« unattended »* (sans surveillance). Par exemple, les stations-services, les bornes pour la délivrance de tickets de cinémas. Ces bornes, classiques, sont de tailles réduites et permettant de réaliser des paiements en utilisant un terminal de paiement qui accepte plusieurs formes de paiement que sont le paiement par carte à puce et le paiement par carte magnétique.

Plus récemment, des bornes de grande taille ont fait leur apparition. Il s'agit généralement de bornes multimédias, comprenant de grands écrans (généralement 46 pouces de diagonales), qui peuvent également être tactiles. Outre le fait qu'elles soient relativement chères, les problèmes techniques présentés par ces bornes sont nombreux. Le premier d'entre eux est ces bornes multimédias sont de types propriétaires. Cela signifie qu'une borne multimédia comprend un ensemble de composants (écran, unité centrale, capteurs de présence, système d'exploitation, application de gestion de la borne) qui sont agencés entre eux pour former la borne. Plus récemment encore, des bornes multimédia qui embarquent des fonctionnalités de paiement ont également été développées. Ces bornes multimédia comprennent globalement les mêmes composants qu'une borne multimédia classique, mais elles embarquent en plus un terminal de paiement, généralement sans contact. Le document US 2004/205491 A1 décrit par exemple une borne multimédia de ce type.

Dans une telle borne multimédia, également appelée borne de paiement en référence aux bornes de plus petite taille précédemment présentées, on utilise par exemple un terminal de paiement de Type NFC (« Near Field Channel »), encore appelé transmission de messages en champs proches. Concrètement, pour réaliser un paiement avec une telle borne de paiement, l'utilisateur appose son moyen de paiement compatible NFC à un endroit bien précis de la borne pour effectuer le paiement de ce qui est affiché à l'écran. Il peut s'agir d'un paiement d'un bien ou d'un service. Il peut par exemple s'agir d'un paiement de places de spectacles, ou encore d'un don à une association. Dans certains cas, il peut s'agir du paiement d'un bien (qui est alors livré à une adresse convenue).

Ce type de borne est compliqué à construire et à mettre en oeuvre. En effet, en règle générale les offres de produits ou de services qui sont affichées sur la borne sont plus ou moins préprogrammées. Par ailleurs, outre le fait que de telles bornes sont relativement impersonnelles, elles présentent en outre le désavantage de ne pas pouvoir interagir de manière poussée avec les utilisateurs clients ; notamment, bien que l'achat puisse être réalisé de manière fluide, de par l'utilisation de la borne sans contact, l'expérience utilisateur « post achat » est souvent décevante. Par exemple, lorsque l'achat concerne un bien qui doit être livré à une adresse de livraison donnée, cela peut nécessiter la saisie, sur un écran tactile, de l'adresse de livraison, et ce par l'utilisateur lui-même. Outre que le fait de devoir saisir cette adresse peut être complexe pour l'utilisateur, cela pose des problèmes de sécurité et de confidentialité car par définition, la borne de paiement étant dans un lieu public, les informations saisies par l'utilisateur peuvent être vue de tout un chacun, ce qui n'est pas souhaitable. Cet exemple de saisie post paiement est représentatif du manque de fluidité des opérations à réaliser après l'achat. De telles situations peuvent également se rencontrer préalablement à l'achat et posent également problème.

Il existe donc un besoin de fournir une solution simple, efficace et largement utilisable pour simplifier la mise en oeuvre de telles bornes et l'interaction de celles-ci avec l'utilisateur. D'une manière plus générale, il existe un besoin faciliter l'interaction entre un dispositif électronique et un terminal de communication d'un utilisateur, particulièrement lorsque l'on dispose d'un dispositif électronique programmable.

### 3. Résumé

L'invention ne pose pas ces problèmes de l'art antérieur. Plus particulièrement, l'invention apporte une solution plus simple aux problématiques préalablement identifiées. En effet, la présente technique permet d'offrir une solution de fluidification de l'échange de données entre le vendeur et le client, une fois l'achat réalisé.

Plus particulièrement, la présente technique porte sur un procédé de transmission de données selon la revendication 1.

Ainsi, dispositif électronique autonome de traitement de transaction de paiement est en mesure de transmettre des messages, contenu dans le contenu HTML qu'il reçoit du serveur, à des utilisateurs et/ou à des clients qui ont utilisés leurs terminaux de communication pour recevoir un tel message.

Selon une caractéristique particulière, la requête d'obtention de contenu comprend au moins une donnée d'identification de borne de paiement.

Ainsi, le serveur est en mesure d'identifier les contenus qui sont destinés à cette borne de paiement. On facilite ainsi grandement la personnalisation du contenu transmis par le serveur de contenus au dispositif électronique autonome de traitement de transaction de paiement. Ainsi, la borne de paiement peut, en toute discrétion, transmettre des données, sous la forme d'un message, à l'utilisateur. Le terminal de communication de l'utilisateur réceptionne ces données par l'intermédiaire de son interface sans contact et réalise la ou les actions relatives à ces données. Plus particulièrement, les données transmises par la borne de paiement peuvent par exemple comprendre une URL à laquelle le terminal de communication peut se connecter pour effectuer un certain nombre de tâches, comme afficher une page de saisie directement sur le terminal de communication de l'utilisateur.

Selon une caractéristique particulière, l'étape de traitement du contenu html comprend une étape de détermination, au sein de la vue à restituer, d'un emplacement d'une donnée représentative de la balise d'échange, en fonction d'une position d'une antenne sans contact dudit au moins un terminal de paiement au sein de ladite borne de paiement.

Selon une caractéristique particulière, ladite balise d'échange comprend au moins un attribut de définition d'un message à transmettre.

Selon une caractéristique particulière, ledit attribut de définition du message à transmettre est une adresse de localisation d'un message, auprès d'un serveur transactionnel, ladite adresse de localisation comprenant un paramètre d'identification de message et au moins un identifiant d'un terminal de paiement appartenant à ladite borne de paiement.

Selon un mode de réalisation particulier, le procédé comprend une étape d'annulation de ladite au moins une transmission de message, ladite étape d'annulation étant mise en oeuvre lorsqu'une durée d'affichage de message est égale à un paramètre temporel déterminé et lorsqu'aucune transmission n'a été effectuée durant la période temporelle débutant à l'issue de la préparation de la transmission et finissant au temps défini par ledit paramètre temporel.

Selon un mode de réalisation particulier, le procédé comprend, précédemment à l'étape de réception par le navigateur, du contenu comprenant ladite au moins une balise d'échange, au niveau du serveur de contenu :
- une étape de réception de la requête en provenance du navigateur ;
- une étape d'identification, par l'intermédiaire de cette requête, de ladite borne de paiement, délivrant un identifiant de ladite borne de paiement ;
- une étape d'obtention, au sein d'une base de donnée, en fonction de l'identifiant, d'un contenu à transmettre à ladite borne, ledit contenu comprenant au moins un message à transmettre comprenant des données de message ;
- une étape d'obtention, pour chaque message à transmettre identifiée dans ledit contenu, d'un couple de données comprenant un identifiant de terminal de paiement et un message à transmettre chiffré ;
- création, par le serveur de contenu, d'une adresse de localisation d'information, vers un serveur transactionnel comprenant l'identifiant du terminal de paiement et le message à transmettre chiffré ;
- création, à partir dudit contenu et des adresses de localisation d'information, du contenu html comprenant une balise d'échange par message à transmettre.

Selon un mode de réalisation particulier, le procédé comprend, précédemment à l'étape de réception par le navigateur, du contenu comprenant ladite au moins une balise d'échange, au niveau du serveur de contenu :
- une étape de réception de la requête en provenance du navigateur ;
- une étape d'identification, par l'intermédiaire de cette requête, de ladite borne de paiement, délivrant un identifiant de ladite borne de paiement ;
- une étape d'obtention, au sein d'une base de donnée, en fonction de l'identifiant de la borne de paiement, d'un contenu à transmettre à ladite borne, ledit contenu comprenant au moins un message à transmettre comprenant des données de message ;
- une étape optionnelle d'obtention, pour chaque message à transmettre identifiée dans ledit contenu, auprès d'un serveur transactionnel, d'une donnée représentative d'un défi associé au message à transmettre ;
- une étape de création, à partir dudit contenu et des données du message à transmettre, du contenu html comprenant une balise d'échange pour le message à transmettre, comprenant le défi optionnel.

L'invention se rapporte également à un dispositif électronique autonome de traitement de transaction de paiement, dite borne de paiement, selon la revendication 9.

Selon une implémentation préférée, les différentes étapes des procédés selon l'invention sont mises en oeuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

### 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- les figures 1A et 1B présentent une borne de paiement objet de la présente ;
- la figure 2 présente plus en détail les composants d'une telle borne de paiement ;
- la figure 3 présente de manière générale l'obtention de données à transmettre par le navigateur intégré à une borne de paiement objet de la présente ;
- la figure 4 décrit la mise en oeuvre d'une balise d'échange dans un mode de réalisation spécifique ;
- la figure 5 décrit la mise en oeuvre d'une balise d'échange dans un autre mode de réalisation.

### 5. Description

### 5.1. Description générale

Comme explicité précédemment, d'une manière générale, la technique propose le remplacement de l'application « propriétaire » de mise en oeuvre de la borne de paiement. Ce remplacement est effectué au profit d'un navigateur (également appelé « Browser » en anglais). Ce remplacement permet de ne disposer que d'un nombre très limité de type d'application de gestion de borne de paiement. Essentiellement, à supposer qu'une borne de paiement puisse mettre en oeuvre un système Windows^{™} ou un système Linux^{™}, seules deux versions du navigateur sont alors nécessaires : une pour l'environnement Windows^{™} et une pour l'environnement Linux^{™}.

Un autre avantage est de laisser au serveur la responsabilité de l'affichage des offres sur la borne. En effet, comme l'application de gestion « classique » est remplacée par un navigateur, celui-ci se contente d'afficher les données qui lui sont transmises, selon un format qui lui est également transmis. Ainsi, selon la présente, le navigateur reçoit, de la part du serveur, un document de type « *html* », auquel on adjoint une ou puiseurs feuilles de style et une ou plusieurs bibliothèques de code *« javascript* ». L'adjonction de ces données, peut être réalisée par l'insertion de lien vers des ressources ou directement en insérant les données dans le document de type « *html ».*

Cependant, bien qu'une telle mise en oeuvre soit intéressante d'un point de vue technique et économique, elle ne permet pas de résoudre l'ensemble du problème posé. Au-delà de la problématique de la gestion de la plateforme, se pose également la gestion post-paiement ou pré-paiement effectué par l'intermédiaire de la borne. On rappelle en effet que la borne est en mesure d'effectuer des paiements, par l'intermédiaire d'un ou plusieurs terminaux de paiement intégrés directement dans la borne. L'utilisation d'une application « propriétaire » sous un environnement « maîtrisé » présente comme avantage une gestion également maîtrisée du terminal de paiement. Le remplacement de cette application « propriétaire » par un navigateur pose des problèmes à résoudre, et notamment celui de la maîtrise des terminaux de paiement et de la manière de transmettre des données pré ou post-paiement à l'utilisateur (au client).

Pour résoudre ce problème, on met en oeuvre, selon la présente technique, une nouvelle balise, dite balise d'échange. Cette balise, connue du navigateur, comprend des données relatives au traitement pré ou post-paiement à réaliser par la borne. Le fonctionnement de cette balise est détaillé par la suite. Lors de la réception par le navigateur de la borne (en provenance du serveur), du document de type html, le navigateur affiche ce document à l'écran de la borne, agrémenté des styles des feuilles de styles et comprenant du code de type « javascript ». Au moins une balise d'échange est présente au sein de ce document, balise d'échange que le navigateur interprète, afin d'effectuer les actions requises par cette balise, et ce en lien avec le ou les terminaux de paiement de la borne, dans l'objectif de transmettre des données par exemple postérieurement au paiement en lui-même (le paiement étant par ailleurs géré par l'intermédiaire d'une balise de paiement). La transmission de messages postérieurement au paiement n'est pas obligatoire. Les données peuvent aussi être transmises antérieurement au paiement, en fonction des besoins d'interaction avec l'utilisateur. En d'autres termes, la balise d'échange de données est utilisée pour transmettre, à l'utilisateur, des données susceptibles d'être utilisées pour favoriser l'interaction entre l'utilisateur et le commerçant (i.e. celui qui vend le produit ou le service proposé à la borne). Notamment, la balise d'échange permet de modifier le mode de communication entre le commerçant et l'utilisateur (le client). Si l'on reprend l'exemple de la saisie de données, dont l'utilisateur devait s'acquitter sur le grand écran de la borne de paiement, l'utilisation de la balise d'échange de données permet de transmettre, au terminal de communication de l'utilisateur, un message (comprenant par exemple une URL générée par le commerçant), message qui est traité par le terminal de communication qui le reçoit et qui peut par exemple se connecter à un serveur dédié à la saisie des données à partir de son terminal de communication, ce qui est beaucoup plus discret, sécurisé et n'oblige pas l'utilisateur à rester devant la borne pour effectuer cette saisie.

D'autres messages peuvent également être transmis, telles que des tickets de caisse numériques, des bons d'achats numériques, des données permettant d'exécuter une application spécifique installée sur le terminal de communication de l'utilisateur, des preuves d'achats et des promotions. Une promotion, par exemple, peut consister en une donnée représentative d'une réduction sur le produit à acheter (et donc transmise avant l'achat). Il en est de même pour le lancement d'une application spécifique, qui peut être réalisé avant l'achat (et le paiement) effectué sur la borne. Des exemples sont détaillés par la suite.

Quoi qu'il en soit, selon l'invention, le message contenant les données est transmis par la borne de paiement au terminal de communication de l'utilisateur par l'intermédiaire d'une interface NFC, qui est présente au sein de la borne de paiement. Comme cela est explicité ci-après, l'utilisation de cette interface NFC pour la transmission des données au terminal de paiement présente de nombreux avantages.

Par ailleurs, l'invention a un effet important tenant à la capacité du commerçant (c'est-à-dire celui dont les produits sont affichés sur la borne) à interagir auprès de client (celui qui achète les produit) par l'intermédiaire de la borne de paiement, qui est elle-même opérée par un opérateur de borne de paiement (par exemple une régie de transport ou autre).

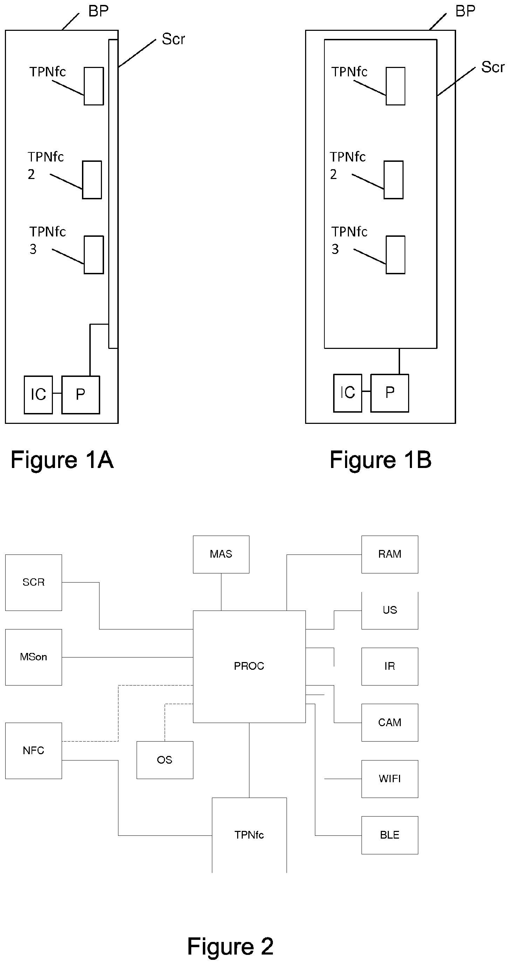

On décrit, en relation avec les figures 1A et 1B, une borne de paiement objet de la présente. Une telle borne se présente sous la forme d'un boîtier, comprenant un moyen de restitution d'information, tel qu'un écran et/ou un haut-parleur. Le moyen de restitution d'information est connecté, par l'intermédiaire d'un ou de plusieurs bus de données à un processeur de traitement. Ce processeur peut être tout type de processeur usuellement destiné à de tels tâches, tel que des processeurs de type PC ou des processeurs destinés à des terminaux plus compacts (tels que des systèmes sur puce, « *SOC »* en anglais pour *« System on Chip* »). Le processeur de traitement comprend un bus d'accès à une mémoire vive, un bus d'accès à une mémoire de masse, un bus d'accès à une ou plusieurs interfaces de communication réseau (interface réseau de type *WiFi, Bluetooth, RJ45)* et un ou plusieurs bus d'accès à des interfaces de communication de type série (« *USB* » pour *« Universal Serial Bus »*)*.* En sus, le processeur comprend un bus d'accès à au moins un terminal de communication se présentant sous la forme d'un terminal de paiement de type sans contact. Un tel terminal de paiement sans contact comprend un processeur de traitement sécurisé, une mémoire sécurisée, un bus d'accès à un processeur NFC, une antenne NFC relié au processeur NFC. Le terminal de paiement peut également comprendre une ou plusieurs interfaces de communication dédiées. En fonction des modes de réalisation, les interfaces de communication du terminal de paiement peuvent être partagées avec les interfaces de communication du processeur de traitement. Le processeur de traitement et les différents modules qui composent la borne de paiement sont pilotés par un système d'exploitation. Le système d'exploitation est de type standard et peut être basé sur une version dérivée du système Linux^{™}. Il comprend des modules de gestion des différents composants de la borne, à l'exception du ou des terminaux de paiement. Le système d'exploitation fait, pour sa part, fonctionner un navigateur adapté à la mise en oeuvre de la présente, et notamment adapté à la gestion et à l'exploitation de balises de paiement. Un terminal de paiement, pour sa part est également piloté par un système d'exploitation, de type propriétaire (cela ne change pas par rapport aux bornes de l'art antérieur). Cependant, les données transmises au terminal de paiement et reçues de la part du terminal de paiement sont sensiblement différentes de celles de l'art antérieur, comme cela est explicité par la suite.

On présente, en relation avec la figure 2, l'architecture d'une borne de paiement selon la présente technique. Une telle borne de paiement (BP) comprend un écran (Scr), de préférence un écran tactile. Un tel écran dispose d'une taille suffisante pour pouvoir afficher, de manière visible par des passants, un ou plusieurs messages publicitaires. Ainsi, l'écran comprend typiquement une taille comprise entre 32 et 55 pouces de diagonale. Un message publicitaire typique affiché par un tel écran comprend par exemple une vidéo et/ou des photos et/ou du texte.

En fonction de l'environnement de destination de la borne de paiement (BM), cette dernière peut également comprendre un module de restitution sonore (MSon) : le module de restitution sonore est destiné à produire des sons qui peuvent accompagner les messages publicitaires émis, lorsque de tels sons peuvent être perçus par les utilisateurs.

L'écran (Scr) et le module de restitution sonore (s'il est présent) sont connectés par un ou deux bus de transport de données à un processeur (Proc) de traitement. Un tel processeur (Proc) comprend suffisamment de capacités de traitement pour effectuer diverses tâches de traitement multimédia, comme par exemple l'affichage d'une vidéo de qualité et/ou l'affichage d'images de résolution supérieure. Le processeur (Proc) est en outre en mesure de recevoir des données par l'intermédiaire de bus de transport de données reliant le processeur (Proc) au module NFC (si celui-ci n'est pas directement géré par les terminaux de paiement intégrés) ou encore aux modules de communication sans fil (comme par exemple le module WiFi ou le module Bluetooth, BLE).

Le processeur (Proc) est par ailleurs relié de manière optionnelle, par l'intermédiaire d'un bus de données, à des capteurs (ultrasonore US, infrarouge IR ou encore à une caméra CAM) pour recevoir des signaux émis par ces capteurs afin éventuellement de détecter la présence d'un ou plusieurs utilisateurs. Ces signaux sont transformés par le processeur et fournis au système d'exploitation (OS). Le processeur comprend également une mémoire vive (RAM) et une mémoire de stockage (MAS).

Le système d'exploitation se charge d'exécuter le navigateur et de gérer les échanges de données entre les différents composants et le navigateur. Dans d'autres modes de réalisation, la borne de paiement peut se présenter sous la forme d'un terminal de type ordinateur, tablette ou smartphone, qui embarque des composants identiques ou similaires dans leurs fonctions et qui sont aptes à mettre en oeuvre les procédés décrits ici, auquel cas, l'expression borne de paiement sera remplacée par une expression plus adéquate.

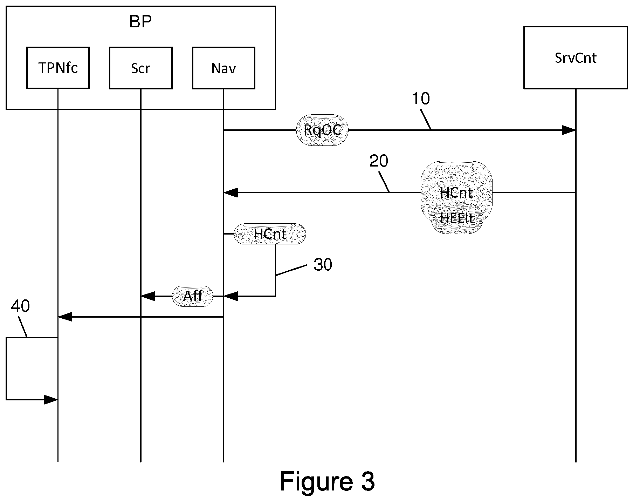

On décrit, en relation avec la figure 3, le fonctionnement général d'une borne de paiement pour effectuer un traitement de transmission de message par l'intermédiaire d'une balise d'échange représentative d'un message à transmettre. Dans un premier temps, la borne de paiement doit recevoir, de la part du serveur, des données à afficher et les informations relatives aux messages à transmettre. Le procédé mis en oeuvre à cette occasion est le suivant :
- une étape de transmission (10), au serveur de contenus (SrvCnt), d'une requête d'obtention de contenu (RqOC), ladite requête d'obtention de contenu comprenant au moins une donnée d'identification (iBP) de borne de paiement ;
   o cette requête est mise en oeuvre à partir de la borne ; c'est donc la borne qui est la requérante des données à afficher, et ce pour permettre une mise en oeuvre correcte de l'échange de données, comme cela est explicité infra ;
- une étape de réception (20), en provenance du serveur de contenus (SrvCnt), d'au moins un contenu html (HCnt) à afficher, ledit contenu comprenant au moins une balise d'échange (HEElt) ;
   - une étape de traitement (30) dudit contenu html (HCnt), délivrant une vue (Aff) dudit contenu html (HCnt) sur ledit au moins un moyen de restitution (Scr), comprenant notamment l'affichage, par ledit navigateur, dudit contenu, de données représentatives de la balise d'échange (indication par laquelle l'utilisateur peut approcher son terminal de communication pour recevoir le message transmis par la borne) étant affichées à proximité d'une antenne NFC d'un terminal de paiement de la borne de paiement. Ceci est mis en oeuvre par exemple par la détermination, au sein de la vue à restituer, d'un emplacement d'une donnée représentative de la balise d'échange, en fonction d'une position d'une antenne sans contact dudit au moins un terminal de paiement au sein de ladite borne de paiement.

De manière complémentaire, le contenu du document de type html comprend également une donnée représentative d'un temps d'affichage du contenu. Lorsque ce temps d'affichage est écoulé, le procédé précédent est à nouveau exécuté, afin d'afficher un nouveau contenu à l'écran. L'objet de cette dernière étape est double : il permet de ne pas laisser afficher en permanence un contenu « statique » qui aurait pour conséquence, d'une part de diminuer la durée de vie du dispositif d'affichage et d'autre part d'avoir un effet relativement déceptif (dû essentiellement au fait qu'un affichage fixe n'attire pas l'œil et donc ne valorise pas les offres de biens et de services affichées sur la borne).

Dans un deuxième temps, postérieurement ou concomitamment à l'affichage du contenu à l'écran, le terminal de paiement prépare (40), en avance (par anticipation), la (ou les) messages à transmettre. Le nombre de transmission de messages possible dépend d'une part du nombre de terminaux de paiement installés dans la borne et d'autre part du nombre de balises présentes dans le contenu. Par exemple, s'il y a quatre terminaux de paiement et seulement trois balises, seules trois transmissions de messages sont préparées. A l'inverse, si trois terminaux de paiements sont installés dans la borne et que quatre balises de transmission de messages sont présentes, seules trois transmissions de messages sont préparées (triée par ordre d'apparence et ou de localisation du terminal de paiement).

La préparation d'une transmission de messages est également conditionnée : soit cette préparation est effectuée indépendamment d'un paiement, et est donc réalisée en avance, c'est-à-dire avant qu'un utilisateur ait manifesté l'intention d'acheter un bien ou un service (indépendamment de la préparation d'une transaction de paiement), soit la transmission de donnée est conditionnée à un achat (et est donc réalisée postérieurement à la transaction de paiement). Dans ce deuxième cas, soit la balise d'échange de données est conditionnelle, et la transmission de la donnée n'est pas nécessairement préparée en avance (elle peut l'être, mais la transmission en elle-même n'intervient qu'après la validation de la transaction de paiement), soit la balise d'échange de données est reçue après le paiement, lors d'une mise à jour du contenu html, auquel cas le procédé mis en oeuvre est indépendant et ne nécessite, de la part du serveur qui transmet la balise, qu'une confirmation du paiement du bien ou du service.

La préparation d'une transmission de messages (en avance, c'est-à-dire avant qu'un utilisateur ait manifesté l'intention d'acheter un bien ou un service) a deux objets : d'une part ne pas avoir à détecter la présence de l'utilisateur (pour initier la transmission) et d'autre part permettre une transmission immédiate du message.

La préparation d'une transmission de messages à destination d'un terminal de communication est essentiellement effectuée grâce à la (ou les) balises d'échange contenue(s) dans le document html.

Une balise d'échange, selon la présente, est essentiellement une instruction, destinée au navigateur, permettant à celui-ci de préparer la transmission d'un message et ce, quelle que soit la nature de ce message, car le type de message à transmettre est inscrit comme attribut de la balise. Une balise d'échange est en quelque sorte une interface universelle entre le serveur, qui transmet le contenu et le terminal de paiement. La balise d'échange est mise en oeuvre conjointement avec le navigateur. La balise d'échange prend globalement la forme suivante et représente le message à transmettre à un terminal de communication :
*<dataexchange> <*/*dataexchange>*

La balise d'échange comprend une pluralité d'attributs, dont les habituels attributs d'identification *(« id », « nome », « image »)* et de styles permettant l'affichage d'un contenu de la balise lorsque c'est nécessaire. La balise d'échange comprend également des attributs spécifiques qui permettent de préparer la transmission du message au terminal de communication. Essentiellement, deux méthodes, exclusives (l'une de l'autre) ou complémentaires, en fonction de l'implémentation, permettent de préparer la transaction. Dans le cadre de la technique revendiquée, la balise comprend l'attribut suivant :
- record : spécifie le message à transmettre, par exemple sous la forme d'un enregistrement NDEF.

D'autres attributs possibles de la balise sont les suivants :
- link : spécifie une adresse de localisation du message à transmettre ; il s'agit d'un attribut permettant d'obtenir le message à transmettre auprès d'une localisation différente de celle du contenu (par exemple directement auprès d'un commerçant, commerçant qui n'est pas nécessairement l'opérateur de la borne de paiement) ;
- type : spécifie le type de message à transmettre ;
- merchant : spécifie des paramètres de commerçant (opérateur de la borne de paiement) ;
   ∘ les paramètres du commerçant peuvent (et sont le plus souvent) chiffrés : il appartient au terminal de paiement de déchiffrer ces informations à partir de données dont il a connaissance ;
- défi: spécifie un challenge : le défi provient par exemple d'un serveur distant, différent du serveur de contenu, et permet au terminal de paiement de réaliser une authentification mutuelle au moment de la préparation de la transmission des données.

Dans le cas où le message (par exemple un enregistrement NDEF) est transmis après une transaction de paiement, les données du contenu html sont affichées et les terminaux de paiement de la borne préparent les transactions (par anticipation), afin de permettre la réalisation de paiements par les utilisateurs en apposant leurs terminaux de communication NFC aux endroits indiqués par les balises de paiement dont au moins certaines données sont affichées à l'écran (par exemple le prix et/ou un logo de paiement sans contact). Deux évènements peuvent se produire à l'issue de la préparation de la transaction : soit un paiement est réalisé, par un utilisateur, pour une des offres affichées et (le message est transmis à l'issue de la transaction au terminal de communication de l'utilisateur), soit aucun paiement n'est effectué (dans un laps de temps donné). Dans ce cas, le procédé comprend une étape d'annulation des transactions de paiement initiées en avance, l'annulation étant mise en oeuvre lorsqu'une durée d'affichage de l'offre est supérieure ou égale à un paramètre temporel déterminé et lorsqu'aucun paiement n'a été effectué durant la période temporelle débutant à l'issue de la préparation de la transaction et finissant au temps défini par ledit paramètre temporel. Si cette annulation se produit, le procédé précédemment décrit (étapes 10 à 40) est à nouveau mis en oeuvre, entrainant l'affichage de (nouvelles) données et la préparation de nouvelles transactions de paiement et de nouveaux messages à transmettre par anticipation.

Dans le cas où les données sont transmises indépendamment de la réalisation d'une transaction, les données du contenu html sont affichées et les terminaux de paiement de la borne préparent la transmission des messages contenus dans les balises d'échange de données.

### 5.2 Mise en oeuvre d'une balise d'échange

Il y a principalement deux méthodes de mises en oeuvre de cette balise d'échange : une utilisant l'attribut lien (« link ») et une autre utilisant les attributs descriptifs. La distinction entre la mise en oeuvre de la première méthode et de la deuxième méthode peut prendre en compte les paramètres physiques de la borne de paiement, mais également des paramètres liés aux messages à transmettre ou encore des paramètres propres à l'opérateur de gestion des bornes de paiement (qui gère un ensemble de bornes de paiement). Ainsi, la mise en oeuvre de l'une ou de l'autre méthode est souvent prédéfinie. La mise en oeuvre de la balise d'échange permet au terminal de paiement de transmettre des messages associés aux offres présentes dans le contenu et/ou aux achats effectués par l'utilisateur.

### 5.2.1 Première méthode de mise en oeuvre

**Une première méthode,** qui ne fait pas l'objet de la présente invention, consiste à fournir, au terminal de paiement, des messages à transmettre par l'intermédiaire d'une URL. Dans ce cas, la balise utilise l'attribut « link » qui, s'il est valorisé, comprend un lien (une URL) vers une ressource sécurisée comprenant le message à transmettre. Cette URL peut être une adresse soit vers le serveur de contenu (celui qui a délivré le contenu html à afficher), soit vers un serveur tiers (un serveur d'un commerçant qui vend le produit, différent du l'opérateur de la borne de paiement).

Cette URL permet par exemple au navigateur (en fonction du matériel cryptographique qu'il embarque) de la borne de prendre connaissance des messages à transmettre et de configurer le terminal de paiement pour préparer la transmission de ces messages par l'intermédiaire de son interface NFC. Cependant, de manière plus efficace cette URL permet directement au terminal de paiement sélectionné de prendre connaissance des messages à transmettre et de se configurer en conséquence et de s'authentifier avec un serveur : l'intérêt est de s'assurer que les messages transmis ne sont pas usurpées par une modification non souhaitée du navigateur.

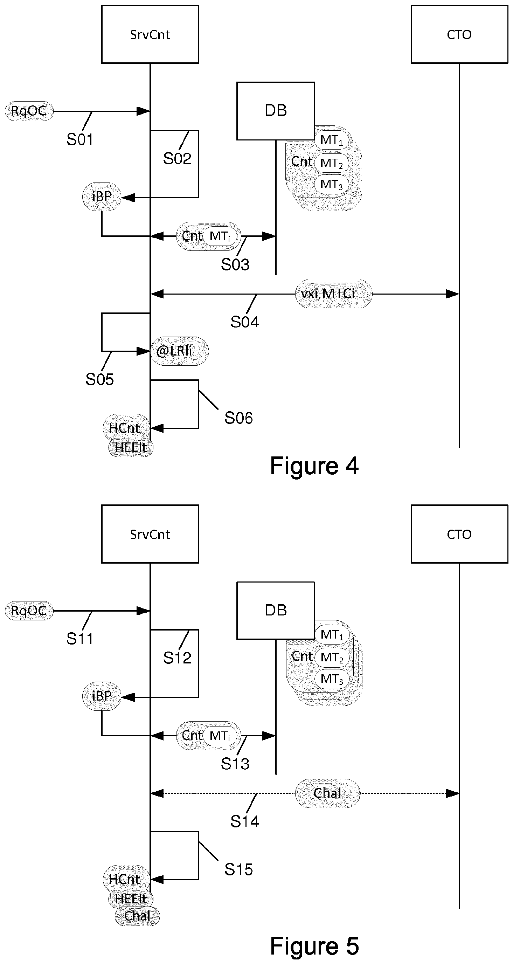

Ainsi, pour mettre en oeuvre une telle méthode, à partir de la balise lien <link>, selon au moins un exemple, décrit en relation avec la figure 4, lorsque le navigateur (Nav) transmet une requête d'obtention de contenu au serveur de contenus (SrvCnt), le procédé suivant est mis en oeuvre par le serveur de contenus (SrvCnt) :
- réception (S01) de la requête (RqOC) en provenance du navigateur (Nav) ;
- identification (S02), par l'intermédiaire de cette requête, de ladite borne de paiement (BP), délivrant un identifiant (iBP) de ladite borne de paiement ;
- obtention (S03), au sein d'une base de donnée (BD), en fonction de l'identifiant (iBP) de la borne de paiement (BP), d'un contenu (Cnt) à transmettre à ladite borne (BP), ledit contenu comprenant au moins un message à transmettre (MTi) comprenant des paramètres (donnée, type de donnée, une date, une durée et des paramètres du commerçant) ;
- obtention (S04), pour chaque message à transmettre (MTi) identifiée dans ledit contenu d'un couple de données comprenant un identifiant de terminal de paiement (vxi) et un message à transmettre chiffré (MTCi), cette obtention comprenant :
   - transmission du message à transmettre (MTi) à un serveur transactionnel (CTO) ;
   - détermination, parmi les terminaux de paiement (vx1,... vx6) de la borne de paiement, d'un identifiant du terminal de paiement (vxi) associé à ce message à transmettre (MTi) ;
   - création, à partir des paramètres du message à transmettre (MTi) et/ou d'autres paramètres, d'un message à transmettre chiffré (MTCi) ;
      - cette donnée est chiffrée à l'aide de la clé publique du terminal de paiement en charge (vxi) ;
      - lorsque le terminal de paiement prend connaissance de cette donnée, il peut l'authentifier comme étant générée par le serveur de transaction (voir infra).
      - l'attribut « défi » (« challenge ») peut également être généré par le serveur de transaction à cette occasion (pour permettre au terminal de paiement de relever le défi généré par le serveur avant la transmission des données) ;
   - transmission, par le serveur transactionnel (CTO), au serveur de contenu (SrvCnt), du couple formé par l'identifiant du terminal de paiement (vxi) et le message à transmettre chiffré (MTCi) ;
- création (S05), par le serveur de contenu (SrvCnt), d'une adresse de localisation d'information (@LRli), vers le serveur transactionnel (CTO) comprenant l'identifiant du terminal de paiement (vxi) et le message à transmettre chiffré (MTCi) ;
- création (S06), à partir dudit contenu (Cnt) et des adresses de localisation d'information (@LRli), du contenu html (HCnt) comprenant une balise d'échange (HEElt) par message à transmettre (MTi).

Cette méthode présente l'avantage de ne pas nécessiter la fourniture de données « secrètes » au navigateur. En effet, avec cette méthode, le navigateur ne sait pas quelles sont les messages à échanger avec le terminal de communication. Ces messages sont chiffrés et transmis directement, par le navigateur (et l'API correspondante) au terminal de paiement dont l'identifiant est présent dans l'URL. Ainsi, même si le navigateur est compromis (i.e. qu'il fait l'objet d'une surveillance pour en altérer le fonctionnement ou pour altérer les opérations de paiement), il n'est pas possible de modifier les données contenues dans les messages à échanger avec le terminal de communication, messages qui sont chiffrés et déchiffrables uniquement par le terminal de paiement désigné (vxi) pour cette donnée à échanger. Cependant, cette méthode présente l'inconvénient, pour le navigateur, de devoir potentiellement obtenir des données du message à transmettre de la part du terminal de paiement, et donc de nécessiter des échanges supplémentaires entre le terminal de paiement et le navigateur (échanges qui sont bien entendus sécurisés). Ainsi, cette méthode est plus efficace en termes de sécurité, mais plus contraignant en termes de mise en oeuvre.

Avantageusement, lorsque le message est transmis suite à la mise en oeuvre effective d'une transaction, par le serveur transactionnel (CTO), le serveur du marchand auquel le bien ou le service a été acheté et qui, muni d'un identifiant de transaction (et/ou d'un numéro de commande) est apte à faire le lien entre la transaction et le type de message à transmettre à l'utilisateur client, afin par exemple de permettre une saisie de complémentaire et/ou de fournir une preuve d'achat, etc. Ceci est également valable pour le deuxième mode de mise en oeuvre décrit par la suite.

### 5.2.2 Deuxième méthode de mise en oeuvre

**Une deuxième méthode** de mise en oeuvre de la balise d'échange, qui fait l'objet de la présente invention, consiste à fournir, au terminal de paiement, des messages à transmettre par l'intermédiaire des attributs de la balise d'échange. Dans ce cas, l'attribut lien n'est pas nécessairement utilisé. Par ailleurs, l'obtention des messages de la part du serveur de contenu (SrvCnt) est différente de la méthode précédente.

Pour mettre en oeuvre une telle méthode, à partir des balises d'échange, selon la présente, dans au moins un mode de réalisation, décrit en relation avec la figure 5, lorsque le navigateur (Nav) transmet une requête d'obtention de contenu au serveur de contenus (SrvCnt), le procédé suivant est mis en oeuvre par le serveur de contenus (SrvCnt) :
- réception (S11) de la requête (RqOC) en provenance du navigateur (Nav) ;
- identification (S12), par l'intermédiaire de cette requête, de ladite borne de paiement (BP), délivrant un identifiant (iBP) de ladite borne de paiement ;
- obtention (S13), au sein d'une base de donnée (BD), en fonction de l'identifiant (iBP) de la borne de paiement (BP), d'un contenu (Cnt) à transmettre à ladite borne (BP), ledit contenu comprenant au moins un message à transmettre (MTi) comprenant des paramètres (enregistrement, type d'enregistrement, une date, une durée et des paramètres du commerçant) ;
- obtention (S14), optionnelle, pour chaque message à transmettre (MTi) identifié dans ledit contenu, auprès d'un serveur transactionnel (CTO), d'un « défi » (Chal) associé au message à transmettre (MTi) comprenant :
   - transmission du message à transmettre (MTi) au serveur transactionnel (CTO) ;
   - création, à partir des paramètres du message à transmettre et/ou d'autres paramètres d'une donnée chiffrée (Chal) de défi ;
   - transmission, par le serveur transactionnel (CTO), de ladite donnée chiffrée (Chal) de défi ;
- création (S15), à partir dudit contenu (Cnt) et des données du message à transmettre (MTi), du contenu html (HCnt) comprenant une balise d'échange (HEElt) pour le message à transmettre (MTi), comprenant le défi optionnel (Chali).

Ce mode de réalisation présente l'avantage de permettre au navigateur d'intégrer directement, au sein de la vue, les messages à transmettre, sans nécessiter de décodage. Cette mise en oeuvre est moins sécurisée que la première, mais elle est également plus souple. En effet, le navigateur prend directement connaissance des données des messages à transmettre, sans avoir à faire appel au terminal de paiement et peut donc préparer la vue plus rapidement. Le terminal de paiement reçoit également, de la part du navigateur, les données qui lui sont destinées (enregistrement). Sur la base des données reçues, le terminal de paiement transmet une requête au serveur de transactions et une série d'échanges à lieu afin de permettre l'authentification du terminal, du serveur de transaction, des données à transmettre. Le procédé mis en oeuvre comprend les étapes suivantes :
- une étape de réception, par le terminal de paiement, des paramètres du message à transmettre ; ils sont transmis par le navigateur par l'intermédiaire d'une API ;
- une étape d'obtention d'une donnée représentative du serveur transactionnel ; elle peut soit être stockée dans une mémoire protégée du terminal de paiement, soit être fournie par le navigateur ;
- une étape de création, à partir des données du message à transmettre et d'une clé privée du terminal de paiement, d'une donnée chiffrée représentative du message à transmettre : le terminal de paiement chiffre les données avec sa clé privée et éventuellement avec la clé publique du serveur transactionnel ; ainsi seul le serveur transactionnel disposant à la fois de la clé publique du terminal et de sa clé privée peut déchiffrer les données transmises par le terminal de paiement ;
- une étape de transmission d'une requête de traitement audit serveur transactionnel, ladite requête de traitement comprenant la donnée chiffrée représentative du message à transmettre et un identifiant du terminal ; et
- lorsque le serveur transactionnel accepte les données transmises par le terminal de paiement, une étape de réception, en provenance du serveur transactionnel, d'une donnée représentative d'une acceptation du traitement de ces données par le terminal de paiement.

Ainsi, seul un terminal de paiement et un serveur transactionnel authentiques sont en mesure de préparer la transmission de messages qui sont également authentiques. On remarque que l'utilisation de la balise d'échange permet avantageusement de « passer » des données au terminal de paiement de manière transparente pour le serveur de contenu. Ceci permet d'avoir une gestion bien plus simple des contenus à transmettre aux bornes de paiement : il n'est plus nécessaire d'avoir un contenu « propriétaire » et des contenus standardisés peuvent être utilisés, sans que cela n'ait d'impact sur la sécurité de l'ensemble des transmissions de données réalisées par les bornes de paiement.

### 5.3. Mise en oeuvre d'une transmission de messages par anticipation (avant un paiement)

La première méthode de préparation de transmission de messages comprend, comme cela a été explicité précédemment, l'utilisation d'une adresse dans la balise « link ». Ce mode de réalisation est plutôt mis en oeuvre lorsque le terminal de paiement dispose de ses propres ressources de communication vers les serveurs (de paiement et/ou commerçant), comme par exemple sa propre interface réseau, mais cela n'a nullement de caractère obligatoire. Dans ce mode de réalisation, le terminal de paiement récupère les données à transmettre depuis une URL de la balise, cette URL (sécurisée, de type *'https:*//*'*) étant transmise par le navigateur. Le terminal de paiement transmet une requête au serveur, qui l'identifie (par exemple grâce au user agent ou à un autre paramètre ajouté par le terminal à l'URL) et vérifie (voire fournit) les données à transmettre.

À l'aide de ces informations, le terminal prépare la transmission, c'est-à-dire qu'il initie la transmission et se met dans l'attente de la présentation d'un terminal de communication. En d'autres termes, le terminal agit comme si le commerçant avait déjà identifié un utilisateur auquel transmettre ces données. La différence étant qu'a priori ni le commerçant ni le terminal n'ont une quelconque information sur la présence ou non, d'un utilisateur. La transmission du message reste donc « ouverte » pendant un temps prédéterminé. Comme explicité, si un client présente son terminal de communication devant l'antenne sans contact du terminal de paiement, la transmission de message est effectuée par le terminal de paiement de la borne. L'avantage de cette manière de faire est que la transmission de message est rapide, qu'il n'y a pas besoin de détecter la présence de l'utilisateur (du client) puisque c'est lui qui se manifeste en présentant son terminal de communication sans contact devant le terminal. On résout ainsi, grâce à cette balise et à cette manière de transmission, l'un des problèmes exposés précédemment avec les bornes de paiement de l'art antérieur, à savoir le besoin de détecter la présence de l'utilisateur avec des capteurs de présence.

Dans la deuxième méthode de préparation de transmission comprend la configuration, par le navigateur, du terminal de paiement pour qu'il prépare la transmission. Ce mode de réalisation est plutôt mis en oeuvre lorsque le terminal de paiement ne dispose pas de ses propres ressources de communication et que le système d'exploitation de la borne fait office de passerelle vers les serveurs (de paiement et/ou commerçant), mais cela n'a rien d'obligatoire. Dans ce mode de réalisation, le navigateur récupère les données de la balise d'échange (record, type, paramètres du commerçant, date, défi « challenge ») et transmet ces informations au terminal de paiement par l'intermédiaire d'une API du terminal de paiement, API permettant au système d'exploitation d'échanger de l'information avec le terminal de paiement. Pour le reste, le procédé d'initialisation de la transmission est le même que précédemment et les avantages procurés sont identiques.

### 5.4. Déroulement de la transmission

La transmission étant préparée, la finalisation de celle-ci est simple. Il suffit, pour ce faire, que l'utilisateur appose son terminal de communication à l'endroit indiqué pour que le terminal de paiement puisse transmettre l'enregistrement (données « record » de la balise d'échange, par exemple un enregistrement NDEF). Pour ce faire, juste après l'initialisation de la transmission, le terminal de paiement émet une requête de transmission. L'émission de cette requête est effectuée de manière cyclique, tant que dure l'affichage, à l'écran de l'indication de transmission. Lorsque l'utilisateur appose son terminal de communication à l'endroit indiqué, l'enregistrement est alors immédiatement obtenu par le terminal de communication, qui effectue alors les opérations requises par l'enregistrement (en fonction du type et des données contenues dans l'enregistrement NDEF).

## Revendications

1. Procédé de transmission de données, procédé mis en oeuvre par un dispositif électronique autonome de traitement de transaction de paiement, dite borne de paiement (BP), ladite borne de paiement (BP) comprenant un processeur de traitement (Prc) connecté à au moins un moyen de restitution d'offre de vente (Scr), et relié à au moins une interface de communication (CI) et à au moins un terminal de paiement sans contact (TPNfc), ledit procédé comprenant :
- une étape de transmission (10), par un navigateur (Nav) installé au sein de ladite borne de paiement (BP), d'une requête d'obtention de contenu (RqOC) à un serveur de contenu (SrvCnt) ;
- une étape de réception (20), par ledit navigateur (Nav), en provenance du serveur de contenu (SrvCnt), d'un contenu html (HCnt) comprenant au moins une balise d'échange (HEElt) ;
- une étape de traitement (30) dudit contenu html (HCnt), délivrant une vue (Aff) dudit contenu html (HCnt) sur ledit au moins un moyen de restitution (Scr) ;
ledit procédé étant **caractérisé en ce qu'**il comprend en outre une étape de préparation (40), par le terminal de paiement sans contact (TPNfc), d'au moins une transmission de message à destination d'un terminal de communication, en fonction de données d'attributs de ladite au moins une balise d'échange (HEElt), ladite étape de préparation comprenant :
- une initialisation de ladite au moins une transmission de message comprenant l'affichage, sur ledit moyen de restitution, d'une indication de transmission ;
- l'obtention, à partir desdites données d'attributs de ladite au moins une balise d'échange, d'un enregistrement spécifiant ledit message ;
- l'émission, de manière cyclique, pendant la durée d'affichage de ladite indication de transmission, d'une requête de transmission comprenant ledit enregistrement.

2. Procédé selon la revendication 1, **caractérisé en ce que** la requête d'obtention de contenu (RqOC) comprend au moins une donnée d'identification de borne de paiement.

3. Procédé selon la revendication 1, **caractérisé en ce que** l'étape de traitement (30) du contenu html (HCnt) comprend une étape de détermination, au sein de la vue à restituer, d'un emplacement d'une donnée représentative de la balise d'échange, en fonction d'une position d'une antenne sans contact dudit au moins un terminal de paiement au sein de ladite borne de paiement.

4. Procédé selon la revendication 1, **caractérisé en ce que** ladite balise d'échange comprend au moins un attribut de définition d'un message à transmettre.

5. Procédé selon la revendication 4, **caractérisé en ce que** ledit attribut de définition du message à transmettre est une adresse de localisation (@LR) d'un message, auprès d'un serveur transactionnel, ladite adresse de localisation comprenant un paramètre d'identification de message et au moins un identifiant d'un terminal de paiement appartenant à ladite borne de paiement.

6. Procédé selon la revendication 1, caractérisé en qu'il comprend une étape d'annulation de ladite au moins une transmission de message, ladite étape d'annulation étant mise en oeuvre lorsqu'une durée d'affichage de message est égale à un paramètre temporel déterminé et lorsqu'aucune transmission n'a été effectuée durant la période temporelle débutant à l'issue de la préparation de la transmission et finissant au temps défini par ledit paramètre temporel.

7. Procédé selon la revendication 1, **caractérisé en ce qu'**il comprend, précédemment à l'étape de réception (20) par le navigateur (Nav), du contenu (html) comprenant ladite au moins une balise d'échange, au niveau du serveur de contenu (SrvCnt) :
- une étape de réception (S01) de la requête (RqOC) en provenance du navigateur (Nav) ;
- une étape d'identification (S02), par l'intermédiaire de cette requête, de ladite borne de paiement (BP), délivrant un identifiant (iBP) de ladite borne de paiement ;
- une étape d'obtention (S03), au sein d'une base de donnée (DB), en fonction de l'identifiant (iBP), d'un contenu (Cnt) à transmettre à ladite borne (BP), ledit contenu comprenant au moins un message à transmettre (MTi) comprenant des données de message ;
- une étape d'obtention (S04), pour chaque message à transmettre (MTi) identifiée dans ledit contenu, d'un couple de données comprenant un identifiant de terminal de paiement (vxi) et un message à transmettre chiffré (MTCi) ;
- création (S05), par le serveur de contenu (SrvCnt), d'une adresse de localisation d'information (@LRIi), vers un serveur transactionnel (CTO) comprenant l'identifiant du terminal de paiement (vxi) et le message à transmettre chiffré (MTCi) ;
- création (S06), à partir dudit contenu (Cnt) et des adresses de localisation d'information (@LRIi), du contenu html (HCnt) comprenant une balise d'échange (HEElt) par message à transmettre (MTi).

8. Procédé selon la revendication 1, **caractérisé en ce qu'**il comprend, précédemment à l'étape de réception (20) par le navigateur (Nav), du contenu (html) comprenant ladite au moins une balise d'échange, au niveau du serveur de contenu (SrvCnt) :
- une étape de réception (S11) de la requête (RqOC) en provenance du navigateur (Nav) ;
- une étape d'identification (S12), par l'intermédiaire de cette requête, de ladite borne de paiement (BP), délivrant un identifiant (iBP) de ladite borne de paiement ;
- une étape d'obtention (S13), au sein d'une base de donnée (DB), en fonction de l'identifiant (iBP) de la borne de paiement (BP), d'un contenu (Cnt) à transmettre à ladite borne (BP), ledit contenu comprenant au moins un message à transmettre (MTi) comprenant des données de message ;
- une étape optionnelle d'obtention (S14), pour chaque message à transmettre (MTi) identifiée dans ledit contenu, auprès d'un serveur transactionnel (CTO), d'une donnée représentative d'un défi (Chal) associé au message à transmettre (MTi) ;
- une étape de création (S15), à partir dudit contenu (Cnt) et des données du message à transmettre (MTi), du contenu html (HCnt) comprenant une balise d'échange (HEElt) pour le message à transmettre (MTi), comprenant le défi optionnel (Chal).

9. Dispositif électronique autonome de traitement de transaction de paiement, dite borne de paiement (BP), ladite borne de paiement (BP) comprenant un processeur de traitement (Prc) connecté à au moins un moyen de restitution d'offre de vente (Scr), et relié à au moins une interface de communication (CI) et à au moins un terminal de paiement sans contact (TPNfc), ledit dispositif comprenant :
- des moyens de transmission, d'une requête d'obtention de contenu (RqOC) à un serveur de contenu (SrvCnt), mis en oeuvre par un navigateur (Nav) installé au sein de ladite borne de paiement (BP) ;
- des moyens de réception, à destination du navigateur (Nav), en provenance du serveur de contenu (SrvCnt), d'un contenu html (HCnt) comprenant au moins une balise d'échange (HEElt) ;
- des moyens de traitement dudit contenu html (HCnt), délivrant une vue (Aff) dudit contenu html (HCnt) sur ledit au moins un moyen de restitution (Scr) ;
ledit dispositif étant **caractérisé en ce qu'**il comprend en outre des moyens de préparation, par anticipation et par le terminal de paiement sans contact (TPNfc), d'au moins une transmission de message à destination d'un terminal de communication, en fonction de données d'attributs de ladite au moins une balise d'échange (HEElt), lesdits moyens de préparation comprenant :
- des moyens d'initialisation de ladite au moins une transmission de message mettant en oeuvre l'affichage, sur ledit moyen de restitution, d'une indication de transmission ;
- des moyens d'obtention, à partir desdites données d'attributs de ladite au moins une balise d'échange, d'un enregistrement spécifiant ledit message ;
- des moyens d'émission, de manière cyclique, pendant la durée d'affichage de ladite indication de transmission, d'une requête de transmission comprenant ledit enregistrement.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de traitement selon la revendication 1 à 8, lorsqu'il est exécuté par un processeur.

## Patentansprüche

1. Verfahren zur Datenübertragung, wobei das Verfahren von einer autonomen elektronischen Vorrichtung zur Verarbeitung einer Zahlungstransaktion, Zahlautomat (BP) genannt, eingesetzt wird, wobei der Zahlautomat (BP) einen Verarbeitungsprozessor (Prc) umfasst, der an mindestens ein Mittel zur Wiedergabe eines Verkaufsangebots (Scr) angeschlossen und mit mindestens einer Verbindungsschnittstelle (CI) und mindestens einem kontaktlosen Zahlungsendgerät (TPNfc) verbunden ist, wobei das Verfahren umfasst:
- einen Schritt der Übertragung (10), durch einen in dem Zahlautomaten (BP) installieren Navigator (Nav), einer Anfrage bezüglich des Erhalts eines Inhalts (RqOC) an einen Inhaltsserver (SrvCnt);
- einen Schritt des Empfangs (20), durch den Navigator (Nav) vom Inhaltsserver (SrvCnt), eines html-Inhalts (HCbt), umfassend mindestens einen Austausch-Beacon (HEElt);
- einen Schritt der Verarbeitung (30) des html-Inhalts (HCnt), der eine Ansicht (Aff) des html-Inhalts (HCnt) auf dem mindestens einen Wiedergabemittel (Scr) liefert;
wobei das Verfahren **dadurch gekennzeichnet ist, dass** es ferner einen Schritt der Vorbereitung (40) mindestens einer Übertragung einer Nachricht an ein Verbindungsendgerät durch das kontaktlose Zahlungsendgerät (TPNfc) in Abhängigkeit von Attributdaten des mindestens einen Austausch-Beacons (HEElt) umfasst, wobei der Vorbereitungsschritt umfasst:
- eine Initialisierung der mindestens einen Nachrichtenübertragung, umfassend die Anzeige eines Übertragungshinweises auf dem Wiedergabemittel;
- auf Basis der Attributdaten des mindestens einen Austausch-Beacons Erhalt einer Aufzeichnung, die die Nachricht spezifiziert;
- während der Anzeigedauer des Übertragungshinweises zyklisches Senden einer Übertragungsanfrage, umfassend die Aufzeichnung.

2. Verfahren nach Anspruch 1, **dadurch gekennzeichnet, dass** die Anfrage bezüglich des Erhalts eines Inhalts (RqOC) mindestens ein Identifikationsdatum eines Zahlautomaten umfasst.

3. Verfahren nach Anspruch 1, **dadurch gekennzeichnet, dass** der Verarbeitungsschritt (30) des html-Inhalts (HCnt) einen Schritt der Bestimmung eines Standorts eines für den Austausch-Beacon repräsentativen Datums in der wiederzugebenden Ansicht in Abhängigkeit von einer Position einer kontaktlosen Antenne des mindestens einen Zahlungsendgeräts in dem Zahlautomaten umfasst.

4. Verfahren nach Anspruch 1, **dadurch gekennzeichnet, dass** der Austausch-Beacon mindestens ein Attribut zur Definition einer zu übertragenden Nachricht umfasst.

5. Verfahren nach Anspruch 4, **dadurch gekennzeichnet, dass** das Attribut zur Definition der zu übertragenden Nachricht eine Lokalisierungsadresse (@LR) einer Nachricht bei einem Transaktionsserver ist, wobei die Lokalisierungsadresse einen Parameter zur Identifikation einer Nachricht und mindestens einen Identifikator eines Zahlungsendgeräts, das dem Zahlautomaten angehört, umfasst.

6. Verfahren nach Anspruch 1, **dadurch gekennzeichnet, dass** es einen Schritt der Löschung der mindestens einen Nachrichtenübertragung umfasst, wobei der Löschungsschritt eingesetzt wird, wenn eine Anzeigedauer einer Nachricht gleich einem bestimmten Zeitparameter ist, und wenn keine Transaktion während des Zeitraums, der nach der Vorbereitung der Übertragung beginnt und mit der durch den Zeitparameter definierten Zeit endet, durchgeführt wurde.

7. Verfahren nach Anspruch 1, **dadurch gekennzeichnet, dass** es vor dem Schritt des Empfangs (20) des Inhalts (html), umfassend den mindestens einen Austausch-Beacon, im Bereich des Inhaltsservers (SrvCnt) durch den Navigator (Nav) umfasst:
- einen Schritt des Empfangs (S01) der vom Navigator (Nav) kommenden Anfrage (RqOC);
- einen Schritt der Identifikation (S02) des Zahlautomaten (BP) über diese Anfrage, der einen Identifikator (iBP) des Zahlautomaten liefert;
- einen Schritt des Erhalts (S03) eines an den Automaten (BP) zu übertragenden Inhalts (Cnt) in einer Datenbasis (DB) in Abhängigkeit von dem Identifikator (iBP), wobei der Inhalt mindestens eine zu übertragende Nachricht (MTi), umfassend Nachrichtendaten, umfasst;
- einen Schritt des Erhalts (S04) eines Datenpaars, umfassend einen Identifikator eines Zahlungsendgeräts (vxi) und eine verschlüsselte zu übertragende Nachricht (MTCi) für jede in dem Inhalt identifizierte zu übertragende Nachricht (MTi) ;
- Erzeugung (S05) einer Lokalisierungsadresse einer Information (@LRli) durch den Inhaltsserver (SrvCnt) zu einem Transaktionsserver (CTO), umfassend den Identifikator des Zahlungsendgeräts (vxi) und die verschlüsselte zu übertragende Nachricht (MTCi);
- auf Basis des Inhalts (Cnt) und der Informationslokalisierungsadressen (@LRli) Erzeugung (S06) des html-Inhalts (HCnt), umfassend einen Austauch-Beacon (HEElt) pro zu übertragender Nachricht (MTi).

8. Verfahren nach Anspruch 1, **dadurch gekennzeichnet, dass** es vor dem Schritt des Empfangs (20) des Inhalts (html), umfassend den mindestens einen Austausch-Beacon, im Bereich des Inhaltsservers (SrvCnt) durch den Navigator (Nav) umfasst:
- einen Schritt des Empfangs (S11) der vom Navigator (Nav) kommenden Anfrage (RqOC);
- einen Schritt der Identifikation (S12) des Zahlautomaten (BP) über diese Anfrage, der einen Identifikator (iBP) des Zahlautomaten liefert;
- einen Schritt des Erhalts (S13) eines an den Automaten (BP) zu übertragenden Inhalts (Cnt) in einer Datenbasis (DB) in Abhängigkeit von dem Identifikator (iBP) des Zahlautomaten (BP), wobei der Inhalt mindestens eine zu übertragende Nachricht (MTi), umfassend Nachrichtendaten, umfasst;
- einen optionalen Schritt des Erhalts (S14) eines für eine Aufgabe (Chal) repräsentativen Datums, die der zu übertragenden Nachricht (MTi) zugeordnet ist, für jede in dem Inhalt beim Transaktionsserver (CTO) identifizierte zu übertragende Nachricht (MTi);
- einen Schritt der Erzeugung (S15) des html-Inhalts (HCnt) auf Basis des Inhalts (Cnt) und der Daten der zu übertragenden Nachricht (MTi), umfassend einen Austausch-Beacon (HEElt) für die zu übertragende Nachricht (MTi), umfassend die optionale Aufgabe (Chal).

9. Autonome elektronische Vorrichtung zur Verarbeitung einer Zahlungstransaktion, Zahlautomat (BP) genannt, eingesetzt wird, wobei der Zahlautomat (BP) einen Verarbeitungsprozessor (Prc) umfasst, der an mindestens ein Mittel zur Wiedergabe eines Verkaufsangebots (Scr) angeschlossen und mit mindestens einer Verbindungsschnittstelle (CI) und mindestens einem kontaktlosen Zahlungsendgerät (TPNfc) verbunden ist, wobei die Vorrichtung umfasst:
- Mittel zur Übertragung einer Anfrage bezüglich des Erhalts eines Inhalts (RqOC) an einen Inhaltsserver (SrvCnt), die durch einen in dem Zahlautomaten (BP) installierten Navigator (Nav) durchgeführt wird;
- Mittel zum Empfang durch den Navigator (Nav) vom Inhaltsserver (SrvCnt) eines html-Inhalts (HCnt), umfassend mindestens einen Austausch-Beacon (HEElt);
- Mittel zur Verarbeitung des html-Inhalts (HCnt), die eine Ansicht (Aff) des html-Inhalts (HCnt) auf dem mindestens einen Wiedergabemittel (Scr) liefern;
wobei die Vorrichtung **dadurch gekennzeichnet ist, dass** sie ferner Mittel zur Vorbereitung mindestens einer Übertragung einer Nachricht an ein Verbindungsendgerät durch Antizipation und durch das kontaktlose Zahlungsendgerät (TPNfc) in Abhängigkeit von Attributdaten des mindestens einen Austausch-Beacons (HEElt), wobei die Vorbereitungsmittel umfassen:
- Mittel zur Initialisierung der mindestens einen Nachrichtenübertragung, die die Anzeige eines Übertragungshinweises auf dem Wiedergabemittel durchführen;
- auf Basis der Attributdaten des mindestens einen Austausch-Beacons Mittel zum Erhalt einer Aufzeichnung, die die Nachricht spezifiziert;
- während der Anzeigedauer des Übertragungshinweises Mittel zum zyklischen Senden einer Übertragungsanfrage, umfassend die Aufzeichnung.

10. Computerprogrammprodukt, das von einem Verbindungsnetz heruntergeladen werden kann und/oder auf einem von einem Computer lesbaren Träger gespeichert ist und/oder von einem Mikroprozessor ausgeführt werden kann, **dadurch gekennzeichnet, dass** es Programmcodebefehle für die Ausführung eines Verarbeitungsverfahrens nach Anspruch 1 bis 8 umfasst, wenn es von einem Prozessor ausgeführt wird.

## Claims

1. Method of data transmission, the method being implemented by an autonomous electronic device for the processing of payment transactions, called a payment kiosk (BP), said payment kiosk (BP) comprising a processor (Prc) connected to at least one rendering means (Src) for rendering sales offers, and linked to at least one communications interface (Cl) and to at least one contactless payment terminal (TPNfc), said method comprising:
- a step for the transmission (10), by a browser (Nav) installed within said payment kiosk (BP), of a request for obtaining contents (RqOC) made to a contents server (SrvCnt);
- a step for the reception (20), by said browser (Nav), coming from the contents server (SrvCnt), of an HTML content (HCnt) comprising at least one exchange tag (HEElt);
- a step for processing (30) said HTML content (HCnt), delivering a view (Aff) of said HTML content (HCnt) on said at least one rendering means (Scr);
said method being **characterized in that** it further comprises a step for the preparation (40), by the contactless payment terminal (TPNfc), of at least one message transmission to a communications terminal, as a function of data attributes of said at least one exchange tag (HEElt), said preparation step comprising:
- initiating said at least one message transmission comprising displaying, on said rendering means, a transmission indication;
- obtaining, from said data attributes of said at least one exchange tag, a record specifying said message;
- cyclically issuing, during the time of display of said transmission indication, a transmission request comprising said record.

2. Method according to claim 1, **characterized in that** the request for obtaining content (RqOc) comprises at least one piece of data for identifying a payment kiosk.

3. Method according to claim 1, **characterized in that** the step for processing (30) said HTML content comprises a step for the determining, within the view to be rendered, of a location of a piece of data representing the exchange tag as a function of a position of a contactless antenna of said at least one payment terminal within said payment kiosk.

4. Method according to claim 1, **characterized in that** said exchange tag comprises at least one attribute defining a message to be transmitted.

5. Method according to claim 4, **characterized in that** said attribute defining the message to be transmitted is a locating address for locating (@LR) a message in a transaction server, said locating address comprising a parameter for identifying a message and at least one identifier of a payment terminal belonging to said payment kiosk.

6. Method according to claim 1, **characterized in that** it comprises a step for cancelling said at least one message transmission, said step for cancelling being implemented when a duration of display of a message is equal to a determined time parameter and when no transmission has been made during the period of time starting at the end of the preparation of the transmission and finishing at the time defined by said time parameter.

7. Method according to claim 1, **characterized in that** it comprises, prior to the step of reception (20) by the browser (Nav), of the content (HTML) comprising said at least one exchange tag, at the contents server (SrvCnt)) :
- a step for receiving (S01) the request (RqOC) coming from the browser (Nav);
- a step of identification (S02), by means of this request, of said payment kiosk (BP) delivering an identifier (iBP) of said payment kiosk;
- a step for the obtaining (S03), within a database (DB), as a function of the identifier (iBP), of a content (Cnt) to be transmitted to said kiosk (BP), said content comprising at least one message to be transmitted (MTi) comprising message data;
- a step for the obtaining (S04), for each message to be transmitted (MTi) identified in said content, of a pair of pieces of data comprising a payment terminal identifier (vxi) and an encrypted message to be transmitted (MTCi);
- the creation (S05), by means of the contents server (SrvCnt), of an information-locating address (@LRIi) to a transaction server (CTO) comprising the identifier of the payment terminal (vxi) and the encrypted message to be transmitted (MTCi);
- the creation (S06), using said content (Cnt) and information-locating address (@LRIi), of the HTML content (HCnt) comprising one exchange tag (HEElt) per message to be transmitted (MTi).

8. Method according to claim 1, **characterized in that** it comprises, prior to the step of reception (20) by the browser (NAV) of the content comprising said at least one exchange tag, at the contents server (SrvCnt):
- a step for receiving (S11) the request (RqOC) coming from the browser (Nav);
- a step of identification (S12), by means of this request, of said payment kiosk (BP) delivering an identifier (iBP) of said payment kiosk;
- a step for the obtaining (S13), within a database (DB), as a function of the identifier (iBP) of the payment terminal (BP), of a content (Cnt) to be transmitted to said kiosk (BP), said content comprising at least one message to be transmitted (MTi) comprising message data;
- an optional step for the obtaining (S14), for each message to be transmitted (MTi) identified in said content, with a transactional server (CTO), of a piece of data representing a challenge (Chal) associated with the message to be transmitted (MTi)) ;
- a step of creation (S15), from said content (Cnt) and data of the message to be transmitted (MTi), of the HTML content (HCnt) comprising an exchange tag (HEElt) for the message to be transmitted (MTii), comprising the optional challenge (Chal).

9. Autonomous electronic device for the processing of payment transactions, called a payment kiosk (BP), said payment kiosk (BP) comprising a processor (Prc) connected to at least one rendering means (Src) for rendering sales offers, and linked to at least one communications interface (Cl) and to at least one contactless payment terminal (TPNfc), said device comprising:
- means of transmission of a request for obtaining content (RqOC) to a contents server (SrvCnt), implemented by a browser (NAV) installed within said payment kiosk (BP);
- means of reception of an HTML content (HCnt) comprising at least one exchange tag (HEElt), addressed to the browser (Nav) and coming from the contents server (SrvCnt) ;
- means for processing said HTML content (HCnt), delivering a view (Aff) of said HTML content (HCnt) on said at least one rendering means (Scr);
said device being **characterized in that** it further comprises means of preparation, by anticipation and by the contactless payment terminal (TPNfc), of at least one message transmission to a communications terminal, as a function of data attributes of said at least one exchange tag (HEElt), said means of preparation comprising:
- means for initiating said at least one message transmission implementing the displaying, on said rendering means, of a transmission indication;
- means for obtaining, from said data attributes of said at least one exchange tag, a record specifying said message;
- means for cyclically issuing, during the time of display of said transmission indication, a transmission request comprising said record.

10. Computer program product downloadable from a communications network and/or stored on a computer-readable support and/or executable by a microprocessor **characterized in that** it comprises program code instructions for the execution of a method of transmission according to claims 1 to 8, when it is executed by a processor.
